Europäisches Patentamt

(19) European Patent Office

Office européen des brevets

(11) Publication number: **0 103 944**
**A2**

(12) # EUROPEAN PATENT APPLICATION

(21) Application number: 83303650.2

(22) Date of filing: 24.06.83

(51) Int. Cl.³: **B 63 B 21/20**
**F 16 G 11/00**

(30) Priority: 29.06.82 GB 8218802
25.08.82 GB 8224401
30.12.82 GB 8236999

(43) Date of publication of application:
28.03.84 Bulletin 84/13

(84) Designated Contracting States:
DE FR GB IT

(71) Applicant: AVON RUBBER PLC
Bath Road
Melksham Wiltshire SN12 8AA(GB)

(72) Inventor: Turner, Donald Milne
Heathfield, Mount Road
Lansdown Bath Avon(GB)

(72) Inventor: Bickley, Alan Charles
29 Westbury View
Melksham, SN12 7JJ(GB)

(74) Representative: Harrison, David Christopher et al,
MEWBURN ELLIS & CO 2/3 Cursitor Street
London EC4A 1BQ(GB)

(54) Coupling link.

(57) A coupling link (1) for resisting extremely high tension loads has an elastomeric core (28) surrounded by oppositely wound helical windings (8, 9). At one end of the link the windings (8, 9) are taken round a first bead ring (11) of which the minimum diameter is as great as the diameter of the wound core (28) while at the other end they are taken round a second ring (23) of which the maximum diameter is no greater than the diameter of the wound core (28). This permits the link (1) to be secured at one end to a cable passing through the second bead ring (23) and terminating in a flared end (27), and secured at the other end by a ring (16) which grips the windings (8, 9) between itself and the first ring (11).

./...

Croydon Printing Company Ltd

Fig. 10.

# COUPLING LINK

This invention relates to coupling links which are intended to sustain extremely high tensile loads. One example of application of such links is in off-shore drilling and extraction operations where major items such as buoys and platforms are anchored to the sea bed. The anchorage of a buoy to a sea-bed through a chain frequently fails adjacent to the buoy, namely in the position where there is the maximum deflection. Some platforms, especially of the tension-leg type, are anchored directly to the sea-bed through a universal coupling, and the engineering of such a universal coupling with the enormous loads that it has to sustain is a matter of greatest difficulty, while failure would be catastrophic.

In application of which these are examples there is a need for a coupling link capable of sustaining extremely high tensile loads (for example up to 1,000 tons) but at the same time permitting flexion. If such a link were to be interposed between a buoy and a chain it would remove the position of habitual failure of an anchor chain; and if interposed between a tension leg platform and its anchorage on the sea-bed would remove the need for a universal joint.

Conventional elastomer engineering shows no precedent for the formulation of such links. Elastomers are habitually subjected to compression loads rather than tension loads, since it is of the nature of elastomer that it cannot resist tension loads indefinitely. However, we sought in the field of elastomers for a form of coupling link which would fulfil the extremely rigorous conditions envisaged.

- The solution is a sleeve of elastomer reinforced with a high tensile strength fibre such as a polyaramid fibre which is provided at each end with means such as an enlargement for axially coupling the sleeve to a load, the fibre reinforcement of the sleeve being at an angle to the axial direction of the sleeve such that in principle tension exerted on the sleeve will cause a change in the angle of the fibre with radial compression and hence extension of the sleeve; but the sleeve enclosing a solid elastomer whereby to resist that compression. In this way we provide an element which is of extreme axial strength while having flexibility.

A preferred form of enlargement for the link is a rigid tapered-section (e.g. trapezoidal-section) ring over which plies of the fibre reinforced elastomer are turned back; this to be entrapped by an annular housing on the loads at each end of the link. A ring may be held permanently on the link by being placed on it before the formation of the enlargement. The ring is then entrapped in the housing to couple the link to a load. If the ring is permanently on the link it may be a continuous ring which is stronger than the split element which otherwise has to engage the enlargement.

The angle at which the turned-back portion of the fibre plies is placed when superimposed on the body of the sleeve should be the same as or greater than the angle of the plies on the sleeve. There will usually be a plurality of plies on the sleeve, perhaps between 4 and 100, and they will be placed with equal numbers of plies in complementary directions, normally alternating by ones or by twos, and at equal angles in each case. The angle will be less than $55^\circ$ and probably between $40^\circ$ and $15^\circ$ to the axial, more preferably between $30^\circ$ and $35^\circ$ to the axial, the angle chosen being one which permits flexion, has a sufficient axial component to use the cord efficiently in carrying load, and has a sufficient circumferential component to permit differential axial extensions or compressions when the sleeve is flexed.

It can be seen that the tension-resisting properties of the link are provided by the fibre-reinforced plies; its ability to remain uncollapsed under extreme loads is due to the presence within the sleeve of elastomer which, within a defined volume, is virtually incompressible. This filling also prevents kinking of the sleeve.

End fittings for the coupling link may include not only the external housing but also means for preventing the extrusion of the filling elastomer from within the sleeves under extreme pressure, these means preferably consisting of a metallic plug fitted into the ends of the link to at least as far as the enlargement formed upon its outer surface.

In order to permit flexion of the link without the introduction of undue differential stresses within the plies of the fibre reinforcement, the thickness of the ply layer should be a low percentage of the total diameter of the coupling and in particular values of 10 to 30% and more particularly 15 to 25% are suitable. The length of the link will be dependent on the design maximum angle between its ends when flexed but a typical link might have a length 5 to 10 times its diameter to give a capacity of $30^{o}$ of flexion between its ends. The object is to provide a bending stiffness such that bending is distributed over the length of the link, but not so high that high bending stresses are generated.

A particular embodiment of the invention will now .be described with reference to the accompanying drawings wherein:

Figs. 1 and 2 show a. link positioned to anchor a tension-leg platform;

Figs. 3 and 4 show a link positioned to join a buoy to its anchor-line;

Figs. 5 and 6 show stages in the making of the link;

Fig. 7 is a diametrical section through one embodiment of an end portion of the link;

Fig. 8 is a diametrical section through a second embodiment of an end portion of the link, only half the end portion being shown;

Fig. 9 shows, partially in section, a connection of the link to a cable of smaller diameter;

Fig. 10 shows a diametrical section through a link showing a modified end portion;

Fig. 11 shows a diametrical section through a link having a hollow core; and

Fig. 12 is the same section as Figure 8, but of a modification.

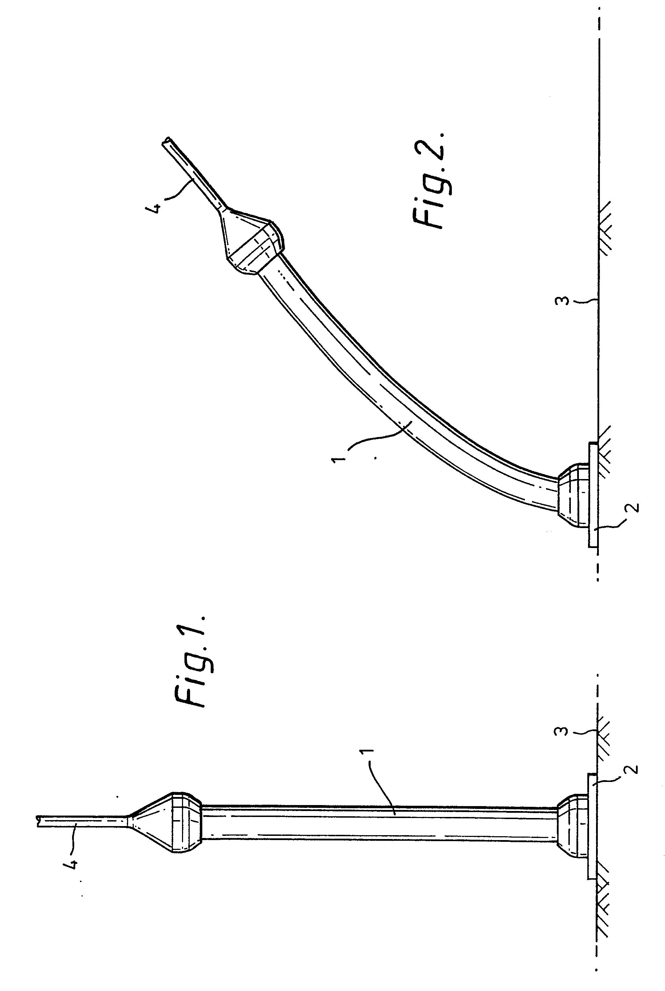

In Figs. 1 and 2 a link 1 constructed as an embodiment of the invention and capable of sustaining a load in tension of 1800 tonnes is held rigidly at one end by an anchor plate 2 in a sea-, lake- or river-floor 3 and rigidly at the other end to a line or leg 4 of a platform designed always to keep its moorings in tension. This link 1 has a length approximately 7 times its diameter and is designed to allow $30^{\circ}$ of bending as between its ends. Maximum flexion on bending will occur adjacent to where it is restrained at its ends, and in this use, adjacent to where it is secured to the anchor plate.

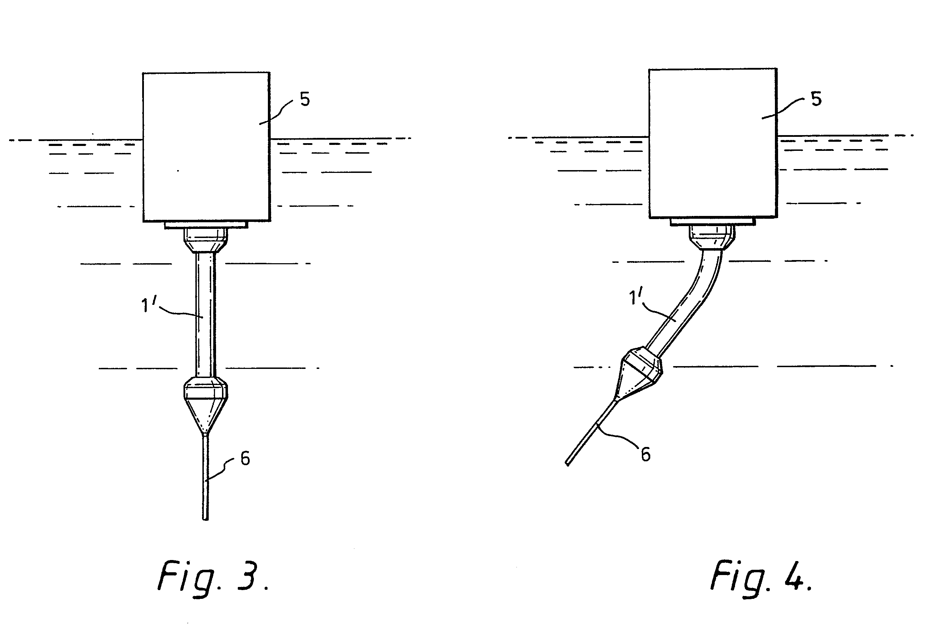

Figs. 3 and 4 shows the link 1' near to the surface of water on which floats a buoy 5 which may be a major structure such as a single-point loading buoy. The link 1' must be capable of withstanding design tensions in the range 5 to 50 tonnes, between the buoy 5 to which it is rigidly secured and an anchor line or chain 6 which is intended to be permanently in tension. Due to the rigid securing of the link to the buoy and the link's inherent flexibility, maximum flexion occurs adjacent to the buoy and the flexion in the line or chain 6 is diminished thus removing a major cause of failure of such items.

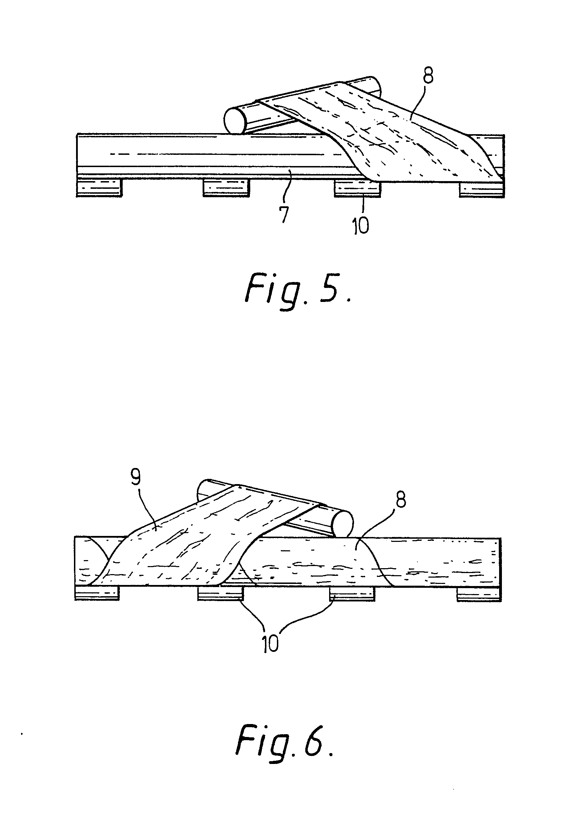

The construction of the link 1 or 1' is seen in Figs. 5, 6 and 7.

A solid cylindrical core 7 of elastomer has a plurality of plies 8,9 of fibre-reinforced elastomer wound onto it. The assembly is rotatably borne on rollers 10. The winding operation is per se known from, e.g. the hose-making art except that here the core will remain permanently within the plies except at its extreme ends where a removable plug is present. The number of plies and the ratio of their thickness to the total thickness of the finished link will be determined by the designed strength of the link, but usually not less than 4 nor more than 100 plies will be needed, and a ratio of 10 to 30%. The core 7 is formed using a polyurethane extended with crumb rubber or polyurethane around a solid rubber core.

Alternatively, the plies 8,9 may be wound around a mandrel, which is then removed and replaced by the preformed core.

The angle at which the plies are wound is selected to allow a minimal axial extension of the finished link, with a reasonable degree of flexibility. Radial contraction or collapse of the tube formed by the plies is restricted by the elastomer core 7. An angle
of between 40° and 15°, usually about 25° (projected
onto the longitudinal axis of the cylindrical part
of the link) gives a best range of properties. The
plies are applied at opposite angles, alternating
one by one (as shown) or alternating in groups of
two or more plies.

The plies are reinforced with very high tensile
strength material. Steel is strong enough for some
applications but is not usually preferred because
of the danger of corrosion or fatigue. Most preferred
are polyaramid fibres, especially Kevlar (Registered
Trade Mark) cords.

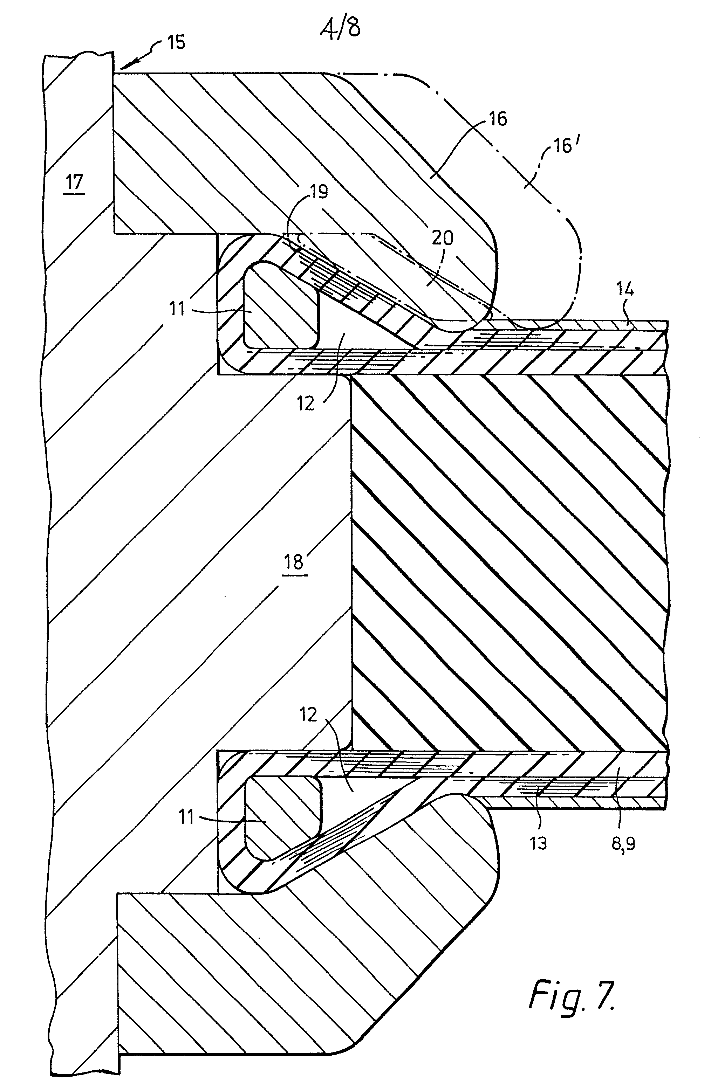

A tube is made by the alternate winding on
of the plies 8,9 etc. Then end enlargements are
made. A continuous substantially trapezoidal-section
massive steel ring 11 (Fig. 7) is placed over each end
of the tube, and the tube beyond it slit axially and
turned back over it and over a rubber triangular-section
flipper ring 12. The angle adopted by the turned-back
plies in the region 13 when they overlie the tube should
be the same as or a few degrees greater than the angles
in the tube so that the behaviour of the end regions
upon experiencing tension is the same as that of the
rest of the link. This may cause small gaps where the
plies were slit, as they pass over the ring 11 itself but this is acceptable. An elastomeric cover sleeve 14 is placed over the whole and particularly so as to cover the ends of the turned-back plies where cord ends may be exposed. The whole is then cured, and the end plugs removed.

The enlargements are held, in use, in housings 15 which include split jaws 16 massively clamped together to entrap the enlargement by tangential screws or bolts (not shown) and secured to a base plate 17 by axial bolts. The base plate 17 includes an insert portion 18 which enters into the end of the tube formed by the plies and occupies the void left by the plug which was present during formation of the link. This prevents extrusion of the elastomer core which might otherwise occur under extreme pressure. The conicity of the inner surface 19 of the jaws corresponds to the angle of the outer surface of the ring 11 and flipper ring 12.

In a modification a continuous steel ring (or rings) 20 shown in dotted lines is placed over the link before the end enlargements are formed and is permanently held on the link by their formation. The link is held by entrapment of ring 20 by jaws 16' as before. The ring 20 is of parallelogram section, at an angle equal to that of the jaws 16' and ring 11 and filler 12.

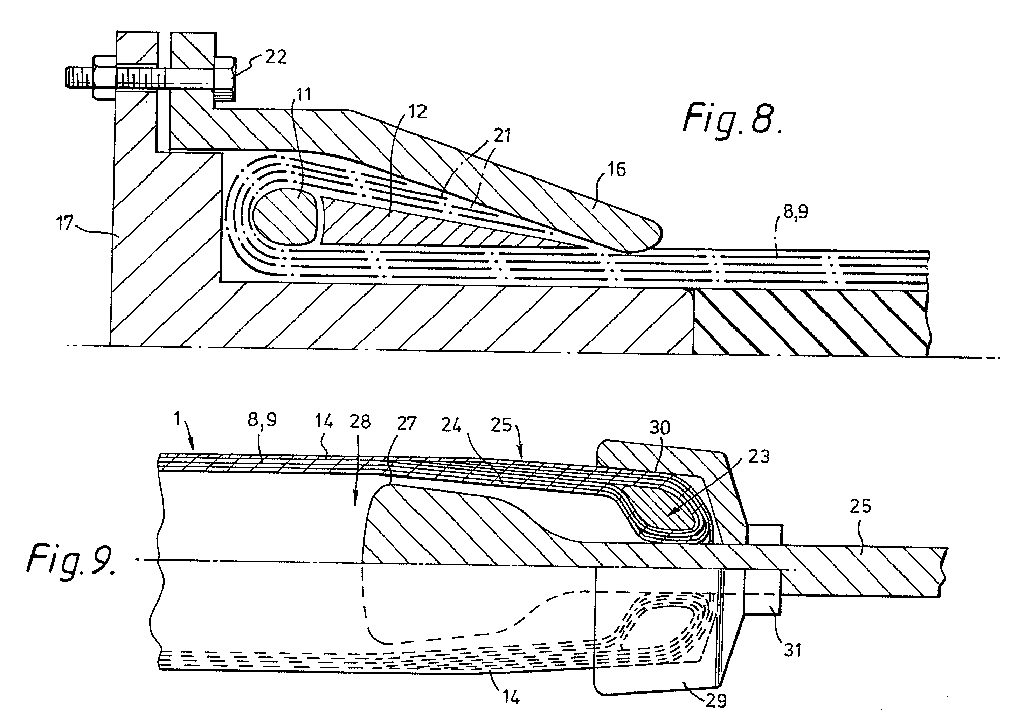

It has been found that the end connection shown in Fig. 7 has a disadvantage that the portion 13 of the turned-back plies sometimes become delaminated from the main body of the plies 8,9. To overcome this the embodiment of Fig. 8 may be used. In that embodiment the turned-back plies 21 are shorter than the length of the jaws 16 and so are enclosed within them. The tightening of the nut 22 fastening the jaws 16 to the base 17 compresses the turned-back plies 21 between the jaws 16 and the triangular-section filler ring 12.

As in Fig. 7, a continuous steel ring corresponding to ring 20 may be placed over the link between the jaws and the turned-back plies 21.

In the arrangements shown in Figs. 1 to 4 the end of the link 1 furthest from the anchor plate 2 may have to be fastened to a cable 4 with a smaller diameter than the diameter of the link 1. The coupling arrangement shown in Fig. 9 may then be used. As shown in that Figure, the plies 8,9 are wrapped around a toroidal bead 23 which has a smaller diameter than the diameter of the link. The bead 23 has a similar trapezoidal section to the ring 11 shown in Figs. 7 and 8.

The diameter of the plies 8,9 is reduced towards

-11-

the ring, creating a tapered portion 24 and this tapering causes the thickness of the plies 8,9 to increase adjacent the bead 23.

The plies 8,9 pass through the aperture of the bead 23 and around it so that the turned-back portion 25 of the plies overlie the tapered portion 24 of the plies 8,9. The cable 26 is then passed through the aperture in the bead 23 and its end is split, flared and encapsulated in epoxy-resin to form a bulb-shaped end 27, with a maximum diameter greater than the diameter of the aperture in the bead 23, but less than the inner diameter of the plies 8,9 of the link. In use the bulb-shaped end 27 is pulled hard against the plies adjacent the inner surface of the bead 23.

The centre of the link 1 is then filled with a settable elastomer 28 such as a polyurethane or silicone and the whole is covered with the sleeve 14 which seals the link 1 and distributes bending along the link and cable. This coupling between the link 1 and the cable 26 can be fabricated on a solid cylindrical drum which is removed before the centre of the link 1 is filled with elastomer.

This arrangement is particularly useful when used at the opposite end of the link 1 to the type of coupling shown in Fig. 7 which has a solid ring 20 overlying the plies 8,9. The ring 20 is passed over the cable 26 and then the connection between the link 1 and the cable 26 is assembled up to the stage where the link 1 is filled with elastomer 28. Then the ring 20 is slid down the link to the free end. Finally the jaws 16 are slid over the link and secured into the base plate 17.

To terminate the link 1, a cover 29 made of e.g. steel can be fitted over the end of the link to lie coaxially of the cable 26. The cover 29 has an internal surface 30 which tapers away from the link 1 to act as an abutment surface for the turned-back portion 25 of the plies 8,9, covered by sleeve 14. The cover is held in place by a fastening 31.

To increase further the strength of the connection of link and cable, glass-fibre reinforced resin can be wound around the connection.

The fact that the turned-back portion 25 terminates on the tapered part 24 ensures that there is sufficient overlap between the plies 8,9 and the turned-back portion without increasing the thickness of the link 1 at this overlap.

The assymetry of the two ends of the link 1 provide several advantages. Firstly it enables the link to be formed on a mandrel core, the core then being removed from the wider end. Secondly, the fact that the diameter of the narrower end is less than the diameter of the main part of the link 1 enables ring 20 and jaws 16 to be in the form of a continuous ring rather than a split ring. Thirdly, the interior of the link 1 provides space for the termination of the cable 26 to be formed and the inwardly extending end of the link 1 provides an abutment surface for the widened end of the cable 26.

The present invention is applicable to other devices in addition to the securing of a cable to a fixed point. It may be used, for example for terminating flexible tube springs in which a rubber composite tube is reinforced with opposed spiral cords of high strength fibre.

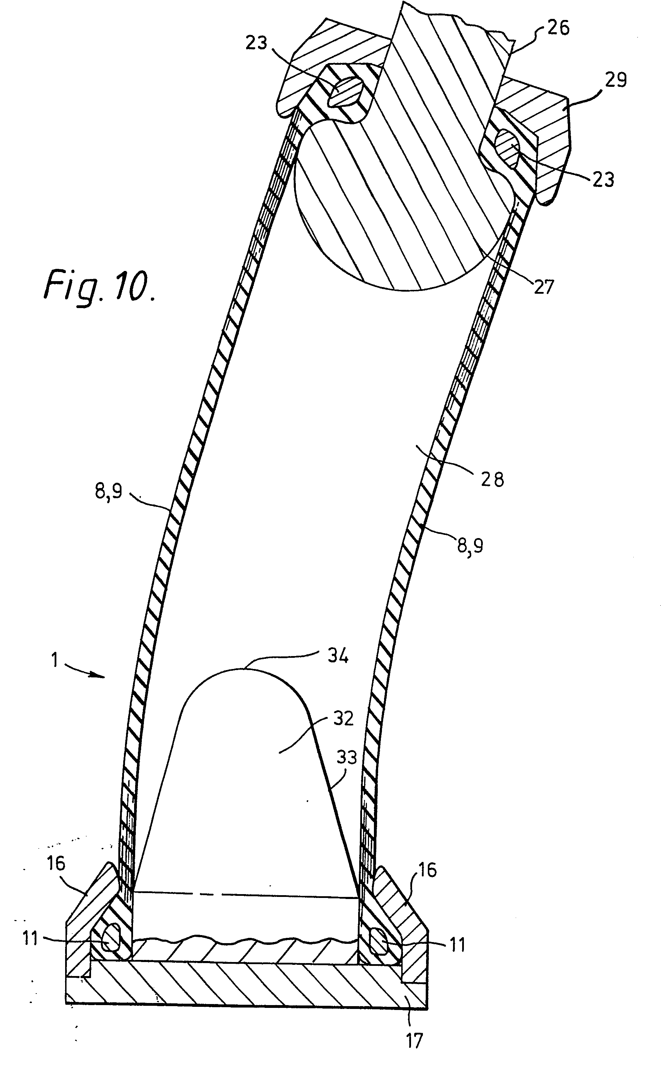

It is desirable to control the curvature of the link 1, particularly adjacent the base plate 17. This is to prevent undue stresses building up in the plies 8,9 adjacent the ring 16. Figure 10 shows an arrangement which seeks to overcome this by providing a conical insert 32 which extends into the link 1. The base of the conical insert 32 is of approximately the same width as the inside of the plies 8,9 adjacent the ring 11 but tapers towards a rounded apex as it extends into the link 1. The presence of this insert 32 means that when the link is bent, elastomer 28 is compressed between the plies 8,9 and the cone 32. The resistence of the elastomer to compression limits the curvature of the link 1 adjacent the insert 32. Thus, the part of the link 1 adjacent the ring 11 can only be bent through a small angle because there is only a small amount of elastomer 28 between the plies 8,9 and the sides 33 of the insert 32. The parts of the link 1 nearer the apex 34 of the insert 32 can be bent through a greater angle as there is a larger amount of elastomer which may be compressed. Above the apex 34 of the insert 32 the elastomer 28 does not resist bending. Thus this modification controls the curvature of the link.

Figure 10 also shows the bulb-shaped end 27 of the cable 26 pulled tight against the plies 8,9 adjacent the bead 23.

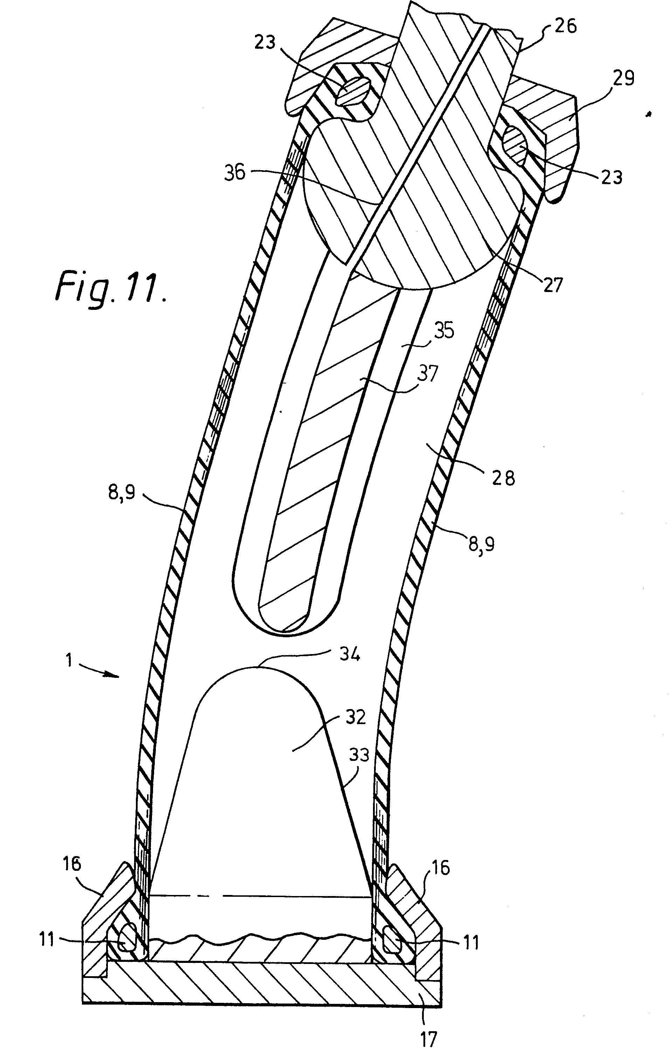

It has been found that it is desirable if the length of the link can be adjusted, to a limited extent, once it has been fitted. This would be useful, for example, so that the tensions in the multiple legs of a tension leg platform could be equalised. Also, if it is decided to remove or replace the link, this is most easily done when there is no tension in the link. When the link of Figures 1 to 10 is placed under longitudinal tension, the helically wound plies 8,9 tend to make the diameter of the link contract and hence compress the elastomer 28. The length of the link depends on the amount of compression produced in the elastomer for a given compressive force. To produce a link of adjustable length, it is desirable that the core within the plies 8,9 is compressed to a controlled amount. To achieve this a chamber 35 is formed in the elastomer 28 as shown in Fig. 11, the chamber 35 extending along the link 1. A duct 36 extends from this chamber 35 through the bulb-shaped end 27 and the cable 26 to a point external of the link 1. This duct 36 communicates with a device (not shown) for pumping fluid into the chamber 35.

The amount of fluid in the chamber 35 determines the minimum volume under compression of the chamber 35 and hence the degree of elongation on the link 1. By varying the amount of fluid in the chamber 35, the length of the link at a given tension may be varied.

The change in length of the link relative to the
changing volume of the fluid is given by

$$\frac{dL}{dV} = \frac{Tan^2 A}{\pi R^2 (2 - Tan^2 A)}$$

where R is the radius of the link and A is the angle of
the plies 8,9 to a plane containing the axis of the link.

An example is the case of a link designed for a
1000 ton load where the diameter of the link is 1 m.
and the length of the portion of the link free to expand
is 4 m. A chamber 4 m. long and 0.44 m. in diameter
central to the solid rubber filling of the link has a
volume of 0.6 m$^3$. To increase the length of the link
by 0.1 m., to 0.4 m$^3$ is displaced causing the chamber
to contract in diameter to 0.26 m. If it is required
to reduce the length of the link by 0.1 m. then the
volume has to be increased by 0.4 m$^3$ with the diameter
of the chamber being expanded to 0.56 m.

The load on the link 1 is proportional to the
pressure inside it. If the link 1 is used for a tension
leg platform with 4 legs operating adjacent each other
it is desirable to equalise the tensions in each leg.
The simplest method of achieving this is to interconnect
the chambers 35 of each link, so that the fluid pressure inside each link is the same. This ensures direct equalisation of load. However, it is preferable that a more complex system is used in which the pressure in each link is separately and independently controlled.

If there was total loss of liquid from the chamber 35 there could be unacceptable collapse of the core of the link 1 resuslting in excessive elongation. To overcome this a core 37 of solid rubber may be placed within the chamber 35. This limits the amount of fluid that can be pumped into, or removed from, the chamber 35 and hence limits the elongation of the link.

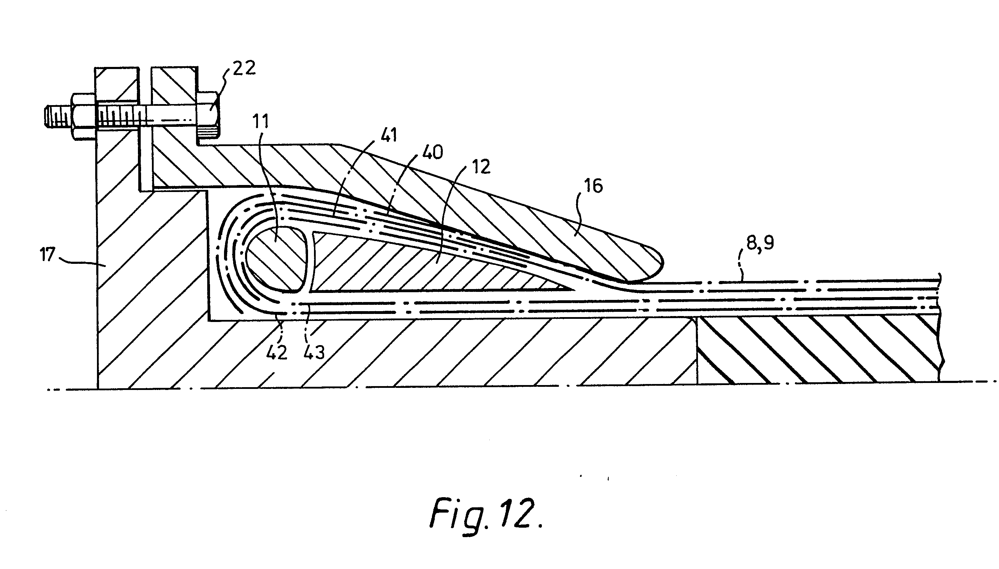

Figure 12 which is the same section as Figure 8 shows how the structure may be modified so that in a multi-ply structure, here an 8-ply structure, alternate pairs of plies the pairs being here designated 40,41 are turned-back over the ring from one radial side of the ring while the other alternate pairs of plies 42 and 43 are turned back from the other side. The extent of overlap of the turned-back ends is as great as possible at least within the zone acted on by the housing 15. This method of construction, which maximises transfer of torsion, is applicable also to the other end of the coupling link.

0103944

CLAIMS:

1.    A method of making a coupling link (1), comprising:
      forming a cylindrical part of the link, the
cylindrical part having an elastomeric core (7) and
at least two reinforcing windings (8,9) extending
helically around the core (7) in opposing senses;
      characterised in that the method includes:
      folding the windings (8,9) at one end of the
link (1) around a first bead ring (11) whose minimum
diameter is not less than the maximum diameter of
the cylindrical part of the link, and
      folding the windings (8,9) at the other end
of the link around a second bead ring (23) whose maximum
diameter is not greater than the minimum diameter
of the cylindrical part of the link (1).

2.    A method according to Claim 1 further including:
      passing the end of the link with the second
bead ring through an aperture in a fixing ring (16,20),
the aperture having a diameter greater than the maximum
diameter of the cylindrical part of the link and less
than the maximum diameter of the first bead ring;
and
      sliding the fixing ring along the link until
the windings (8,9) are entrapped between the fixing
ring and the first bead ring.

3.    A method according to Claim 1, wherein the
cylindrical part of the link 1 is formed by wrapping
the windings (8,9) around a mandrel, removing the mandrel, and inserting the elastomeric core (7).

4. A method according to Claim 3, wherein the steps of folding the windings around the first and second bead rings are carried out before the elastomeric core (7) is inserted, and, after the folding of the windings (8,9) but before the insertion of the core (7) an insert (26) is inserted into the link from the end of the link having the first bead ring, the insert having a cylindrical part which is passed through the second bead ring, and a flared portion (27) of a maximum diameter greater than the minimum diameter of the second bead ring which entraps the windings (8,9) between that flared portion (27) and the second bead ring.

5. A coupling link (1) having a cylindrical part with an elastomeric core (7), and at least two reinforcing windings (8,9) extending helically around the core (7) in opposing senses, characterised in that:

at one end of the link (1) the windings (8,9) are folded around a first bead ring (11) whose minimum diameter is not less than the maximum diameter of the cylindrical part of the link and at the other end of the link (1) the windings (8,9) are folded around a second bead ring (23) whose maximum diameter is not greater than the minimum diameter of the cylindrical part of the link.

6. A coupling link according to Claim 5 having a fixing ring (16,20) extending around the link (1) adjacent the first bead ring (11) the link passing through an aperture in the fixing ring (16,20) of a diameter greater than the maximum diameter of the cylindrical part and less than the maximum diameter of the first bead ring, the fixing ring (16) entrapping the windings (8,9) between itself and the first bead ring (11).

7. A coupling link according to Claim 5 or Claim 6 having a flipper ring (12) of triangular cross-section abutting the bead ring (11) whose diameter is not less than the maximum diameter of the cylindrical part, the flipper ring extending towards the other end of the link, the windings (8,9) passing over one side of the flipper ring (12) around the abutting bead (11) and over another side of the flipper ring (12).

8. A coupling link according to any one of Claims 6 to 8, wherein at least one winding (42,43) extends through the hole in one of the bead rings (11) before it folds around that bead ring (11) whilst the or another winding (40,41) folds around that bead ring (11) before it extends through the hole in that bead ring (11).

9. A coupling link according to any one of the preceding Claims, having a rigid insert (18,32) extending into the link.(1) from the end at which is located the first bead ring (11).

10. A coupling link according to Claim 5, wherein the insert (32) tapers to a rounded end as it extends into the link (1).

11.     A coupling link according to any one of Claims 6 to 11 having an insert (26) extending into the link from the end at which is located the bead ring (23) whose diameter is not greater than the diameter of the cylindrical part, the insert (26) having a flared portion (27) within the link entrapping the windings between that flared portion and the adjacent bead ring (23).

12.     A coupling link according to any one of Claims 6 to 11, wherein the core (7) has a chamber (35) extending axially along the link (1) and in communication with means for pumping fluid into the chamber (35).

Fig.1.

Fig.2.

*Fig. 3.*

*Fig. 4.*

*Fig. 5.*

*Fig. 6.*

Fig. 7.

Fig. 8.

Fig. 9.

0103944

*Fig. 10.*

7/8

Fig. 11.

Fig. 12.

8/8

0103944